# EUROPÄISCHE PATENTSCHRIFT

(11) **EP 4 373 682 B1**
(45) Veröffentlichungstag und Bekanntmachung des Hinweises auf die Patenterteilung: **31.12.2025**
(21) Anmeldenummer: 22731696.5
(22) Anmeldetag: 07.06.2022
(51) Int. Cl.: B60J 3/04, B60R 21/015, G02F 1/163

(54) **VERFAHREN UND VORRICHTUNG ZUR VERSCHATTUNG EINES GEGENSTANDES**
METHOD AND DEVICE FOR SHADING AN OBJECT LOCATED IN A REGION
PROCÉDÉ ET DISPOSITIF D'OMBRAGE D'UN OBJET SITUÉ DANS UNE ZONE

(30) Priorität: 20.07.2021 DE 102021207732
(43) Veröffentlichungstag der Anmeldung: 29.05.2024
(73) Patentinhaber: VOLKSWAGEN AKTIENGESELLSCHAFT, 38440 Wolfsburg (DE)
(72) Erfinder: VOLTMER, Jörg, 30559 Hannover (DE); HOPPMANN, Hendrik, 38110 Braunschweig (DE); KÖSTERMANN, Janis, 10557 Berlin (DE)
(86) Internationale Anmeldenummer: PCT/EP2022/065361
(87) Internationale Veröffentlichungsnummer: WO 2023/001444

(56) Entgegenhaltungen:
- WO-A1-2018/182676
- DE-A1- 102014 220 818
- DE-A1- 102018 129 099
- US-B1- 9 702 183

## Beschreibung

Die vorliege Erfindung betrifft ein Verfahren sowie eine Vorrichtung zur Verschattung einer in einem Bereich befindlichen Person und/oder eines Lebewesens und/oder eines Gegenstandes nach den unabhängigen Ansprüchen.

Aus dem Stand der Technik ist grundsätzlich bekannt, Passagiere, beispielsweise eines Fahrzeuges, zu verschatten, indem beispielsweise Rollos oder Gardinen eingesetzt werden, die teilweise auch elektrisch angesteuert werden können. Hierbei gibt es jedoch nur wenig Spielraum, individuelle Lösungen zu berücksichtigen. Insbesondere erfolgt diese Verschattung nicht dynamisch hinsichtlich veränderter Positionen und Ausgestaltungen der verschatteten Objekte, sowie der veränderten Lichteinwirkungen im gegenseitigen Wechselspiel.

Beispielsweise offenbart die DE 10 2018 129 099 A1 ein Verfahren und eine Vorrichtung zum Steuern von Fenstereintönungsgraden zum Schutz des Innenraums eines autonomen Fahrzeugs.

Ferner ist aus der US 9,702,183 B1 ein System zur Reduzierung des in ein Fahrzeug einfallenden Sonnenlichts bekannt umfassend ein Fenster mit einer Anordnung von Flüssigkristallen, die zwischen einem transparenten und einem schattierten Zustand umgeschaltet werden kann.

Die WO 2018/182676 A1 offenbart ein Computer in einem Fahrzeug, welcher den Insassentyp, den Standort und die Ausrichtung des Fahrzeug bestimmen und die Intensität und Richtung des Sonnenlichts ermitteln kann.

Aus der DE 10 2014 220 818 A1 sind eine Vorrichtungen und ein Verfahren zur Vermeidung, Verminderung bzw. Reduzierung der Blendwirkung in Räumen durch äußere Lichtquellen, insbesondere die Sonne und Reflexionen der Sonne, und zur Wärmeregulierung von Räumen bekannt.

Der vorliegenden Erfindung liegt die Aufgabe zugrunde, ein Verfahren zur Verschattung derart zu verbessern, dass dieses auf der einen Seite einen maximalen Komfort einer im Bereich befindlichen Person und/oder eines im Bereich befindlichen Lebewesens und/oder Gegenstandes gewährleistet und auf der anderen Seite eine Anpassung an individuelle Anforderungen ermöglicht.

Gelöst wird die Aufgabe durch ein Verfahren zur Verschattung eines in einem Bereich Gegenstandes, nämlich eines im Bereich fest verbautes Displays, das ein Erkennen der Position mindestens eines Gegenstandes, die bzw. der sich im Bereich befindet, in mindestens einem zuvor definierten Sektor des Bereiches umfasst.

Ferner umfasst das Verfahren eine Ansteuerung mindestens eines Bereiches des mindestens einen Oberflächenelementes des Bereiches, die hinsichtlich deren Transparenz anpassbar ist, um den mindestens einen Sektor zu verschatten.

Unter einer Verschattung kann eine Verminderung des Lichteinfalls durch den Bereich zu verstehen sein, wobei dies durch eine Anpassung der Transparenz des Bereichs erreicht wird. Diese Anpassung kann sich auf den UV-Anteil des durchfallenden Lichts beziehen. In anderen Worten kann die spezifische UV-Licht-Durchlässigkeit angepasst werden. Durch die dynamische Ansteuerung der Durchlässigkeit der UV-Strahlen kann es hier zu einer besonderen Schutzwirkung kommen. Dabei kann die UV-Lichtdurchlässigkeit separat angepasst werden. Denkbar ist u.U. der Fall, dass eine Person ggf. gerne Lichteinfall hätte, aber - aufgrund gesundheitlicher Bedenken/Gefahren - sich vor UV-Einstrahlung schützen möchte. Ferner kann sich die Anpassung auf die gesamten Anteile des sichtbaren Lichts beziehen. Die Verschattung kann dabei bis zu einer kompletten Verdunklung reichen, sodass kein Licht mehr durch den Bereich treten kann.

Unter dem Begriff "Bereich" kann insbesondere ein Innenraum, vor allem ein Passagierraum eines Transportmittels, wie bspw. eines Fahrzeuges, verstanden werden. Bei dem Fahrzeug handelt es sich insbesondere um ein Personenkraftfahrzeug. Es kann auch ein Reisebus oder ein Wohnwagen sein. Ferner kann es sich aber auch um einen Innenraum eines Gebäudes handeln. Ferner kann der Bereich nicht räumlich abgeschlossen sein, sondern durch das Oberflächenelement begrenzt sein. Bei dem Bereich kann es sich bspw. um einen Abstellort und/oder Aufenthaltsort handeln, der vorzugsweise zu einer Seite hin von dem Oberflächenelement begrenzt wird. Bei dem Oberflächenelement kann es sich dabei bspw. um einen Sonnenschutz, wie bspw. eine Überdachung oder einen Sonnenschirm, handeln.

Das Erkennen der Position der mindestens einen Person und/oder des mindestens einen Lebewesens und/oder des mindestens einen Gegenstandes, die sich im Bereich befinden, erfolgt insbesondere mit Hilfe mindestens eines vorzugsweise positionsgebenden Sensors. Unter dem Begriff "Lebewesen" ist vor allem ein Tier zu verstehen. Hierbei kann es sich beispielsweise um eine Kamera, Radar, u.v.m. handeln. Insbesondere werden sämtliche im Bereich befindliche Personen und/oder Lebewesen und/oder Gegenstände hinsichtlich deren dynamischen Position und Bewegungsänderung erkannt.

Das Oberflächenelement ist durchleuchtbar und vorzugsweise transparent. Das mindestens eine Oberflächenelement kann eine Glasaußenfläche des Bereiches sein, die insbesondere hinsichtlich deren Transparenz anpassbar ist, sodass durch eine Ansteuerung mindestens eines Bereiches erreicht wird, dass der Sektor, in dem sich die Person und/oder das Lebewesen und/oder der Gegenstand befindet, in Transparenz variabel verschattet wird.

Insbesondere umfasst das Verfahren das Aufteilen des Bereiches in unterschiedliche Sektoren, wobei unter einem Sektor insbesondere ein Raumelement, sprich ein Unterbereich, des Bereiches zu verstehen ist. Mittels der Erkennung der Position können somit Sektoren des Bereiches, in denen sich eine Person und/oder ein Lebewesen und/oder ein Gegenstand befindet, als belegt erkannt und identifiziert werden. Diese belegten Sektoren können dann durch Ansteuerung der Transparenz des mindestens einen Oberflächenelementes verschattet werden. Insbesondere werden nur diese belegten Sektoren verschattet.

Ferner umfasst das Verfahren insbesondere eine vorherige Aufteilung des Oberflächenelementes, insbesondere sämtlicher transparenter Oberflächenelemente des Bereiches, in unterschiedliche Bereiche. Das Verfahren kann eine Bestimmung des mindestens einen anzusteuernden Bereichs des Oberflächenelementes umfassen, um die Verschattung des mindestens einen Sektors zu erreichen. Dabei sind Bereiche der Oberflächenelemente selektiv und unabhängig voneinander bezüglich deren Transparenz anpassbar. Unter dem Bereich des Oberflächenelementes sind insbesondere Pixel zu verstehen. In anderen Worten lässt sich das Oberflächenelement mittels der Ansteuerung vorzugsweise pixelweise in dessen Transparenz verändern. Das Oberflächenelement kann sich somit in feiner pixelorientierter Auflösung in der Transparenz ansteuern lassen.

Insbesondere erfolgt die Bestimmung unter Berücksichtigung, in anderen Worten in Abhängigkeit, eines zuvor ermittelten Lichteinfallswinkels hinsichtlich mindestens eines Oberflächenelementes und/oder externer Informationen, bspw. aus mindestens einem Datenmodell. Unter dem Begriff "Datenmodell" sind insbesondere Datenmodelle hinsichtlich des Wetters zu verstehen, das den Bereich umgibt. Dabei kann es sich um Datenmodelle hinsichtlich des Wolkenzuges und/oder des Sonnenstandes handeln. Diese Datenmodelle können beispielsweise mittels des Verfahrens abrufbar, bspw. online abrufbar, sein, sodass aktuelle Informationen für die Bestimmung, welche Bereiche des mindestens einen Oberflächenelementes anzusteuern sind, verwendet werden können.

Ein Lichteinfallswinkel kann beispielsweise mittels Sensoren ermittelt werden, beispielsweise mittels eines Lichtsensors oder einer Kamera. Beispielsweise kann auch ein Regensensor eingesetzt werden. Insbesondere kann das Verfahren ein Erkennen von sich außerhalb des Bereiches befindlichen Lichtquellen und/oder Blendquellen, an denen bspw. Licht einer Lichtquelle reflektiert wird, umfassen. Dabei kann die genaue Position bestimmt werden. Dies können beispielsweise die Sonne oder andere Blendquellen, beispielsweise andere Fahrzeuge, oder Straßenlaternen sein. Hinsichtlich der Lichtquellen kann individuell ein Lichteinfallswinkel bestimmt werden. Unter Berücksichtigung des mindestens einen Lichteinfallswinkels kann ermittelt werden, welche Bereiche welches Oberflächenelementes verschattet werden müssen, um bestimmte Sektoren des in Lichteinfallsrichtung dahinter liegenden Bereichs verschatten. Die Zuordnung von Sektoren des Bereiches und Bereichen des mindestens einen Oberflächenelementes ergibt sich in Abhängigkeit des Lichteinfallswinkels bzw. der erkannten Position der Lichtquelle (z.B. auch auf Basis von relationalen Berechnungen).

Bei dem zu verschattenden Gegenstand handelt es sich beispielsweise um eine künstliche Lichtquelle und/oder Blendquelle in dem Bereich. Bei der künstlichen Lichtquelle kann es sich z. B. um ein im Bereich fest verbautes Display, beispielsweise ein Infotainmentsystem, handeln. Bei dem zu verschattenden Gegenstand handelt es sich erfindungsgemäß um ein im Bereich fest verbautes Display.

Dieses kann gezielt verschattet werden, sodass zumindest weniger Licht von außen durch das mindestens eine Oberflächenelement auf das Display fällt, und somit eine bessere Ablesbarkeit zu erreichen. Eine Verschattung einer künstlichen Lichtquelle und/oder Blendquelle kann vorzugsweise gezielt nur erfolgen, wenn beispielsweise kontextuell Bedienschritte einer im Bereich befindlichen Person erwartet werden und/oder erkannt werden. Erfindungsgemäß wird eine Verschattung dann ausgelöst, wenn eine Information auf dem Display angezeigt werden soll, beispielsweise eine Warnmeldung oder ein Manöver hinsichtlich der Navigation.

Ferner kann es sich bei der künstlichen Lichtquelle um ein Display eines Mobilgerätes, beispielsweise eines Laptops, eines Smartphones, eines Zeit-/Informationsgebers, eines Tablets oder eines RSE-Devices, handeln. Hinsichtlich derer kann in Abhängigkeit deren genauen Position eine bessere Ablesbarkeit und eine reduzierte Gerätetemperatur durch weniger Lichteinfall erreicht werden.

Insbesondere erfolgt das Erkennen der Position der Person und/oder des Lebewesens und/oder des Gegenstandes regelmäßig, vor allem kontinuierlich, sodass auch die Verschattung dynamisch angepasst werden kann, in Abhängigkeit von der aktuellen Position. Hinsichtlich eines Gebäudes, in dem sich der Bereich befindet, wobei unter den Oberflächenelementen in diesem Fall vor allem Fenster des Gebäudes zu verstehen sind, können auch in diesen Innenräumen Gegenstände erkannt werden, wie beispielsweise die oben beschriebenen künstlichen Lichtquellen. Auch können beispielsweise Arbeitsplätze, aber auch Außenflächen als zu verschattende Sektoren zuvor definiert werden und/oder auch dynamisch erkannt werden.

Insgesamt wird eine volldynamische Verschattung erreicht, um der mindestens einen Person und/oder dem mindestens einen Lebewesen einen maximalen Komfort Bereich zu ermöglichen, da diese vom Lichteinfall maskiert werden können. Somit werden Ärgernisse bezüglich des Lichteinfalls, insbesondere ausgehend von Sonneneinstrahlung, in den Bereich vermieden. Es wird somit eine intelligente Ansteuerung der Transparenz im Sinne einer gezielten Verschattung des Bereiches ermöglicht.

Die Bestimmung des mindestens einen anzusteuernden Bereichs, dessen Transparenz zur Verschattung verändert werden soll, kann insbesondere unter Berücksichtigung zuvor ausgewählter Anforderungen mindestens einer im Bereich befindlichen Person erfolgen. Beispielsweise kann die Stärke der Verschattung auf Wunsch der Person in den Sektoren, in denen sich die Person befindet, angepasst werden. Die Anforderungen können beispielsweise mittels eines entsprechenden Human-Machine-Interfaces im Rahmen des Verfahrens abgefragt werden. Es können somit die individuellen Bedürfnisse von Personen auf einzelnen Sitzplätzen berücksichtigt werden. Beispielsweise kann eine maximale Helligkeit durch Tageslichteinfall bei minimaler Blendung für beispielsweise Fahrer und Beifahrer eines Fahrzeuges erreicht werden. Dabei kann das Verfahren das zyklische Abfragen von Anforderungen mindestens einer im Bereich befindlichen Person umfassen. Die Bestimmung des anzusteuernden Bereichs der Oberflächenelemente und die Ansteuerung der bestimmten Bereiche kann hingegen fortlaufend erfolgen. Auch können entsprechenden Anforderungen hinsichtlich Gegenständen und/oder Lebewesen eingestellt werden.

Wenn es sich bei dem Bereich um einen Passagierraum eines Fahrzeuges handelt, kann es sich bei den Oberflächenelementen um ein Fenster des Fahrzeuges, insbesondere um eine Seitenscheibe und/oder eine Heckscheibe und/oder eine Frontscheibe und/oder eine Deckenscheibe des Fahrzeuges, handeln. Bei der Deckenscheibe kann es sich beispielsweise um ein Glasdach des Fahrzeuges handeln. Insbesondere betrifft das Verfahren sämtliche zuvor genannten Glasaußenflächen des Fahrzeuges. Vorzugsweise erfolgt die Bestimmung des mindestens einen anzusteuernden Bereichs unter Berücksichtigung einer Position und Bewegungsrichtung des Fahrzeuges.

Der ermittelte Lichteinfallswinkel kann an in einer Umgebung des Fahrzeuges befindliche andere Fahrzeuge weitergegeben werden. Dies kann insbesondere mittels Funk erfolgen, beispielsweise durch ein entsprechendes C2X-Modul. Auf diese Weise können auch andere Fahrzeuge die bereits ermittelten Informationen hinsichtlich der Lichteinfallskoordinaten effizient nutzen, insbesondere, wenn deren Ausstattung mit Sensorik nicht entsprechend ist. Über Infrastruktur könnten solche Informationen auch dynamisch weitergegeben werden. Ferner kann die Information an eine andere Infrastruktur, bspw. eine Cloud, weitergeben werden.

Ferner kann das Verfahren das Erkennen von Kindersitzen und/oder Babyschalen in mindestens einem Sektor des Bereiches umfassen. Unter einem Kindersitz kann beispielsweise auch eine Sitzerhöhung zu verstehen sein. Dabei kann der mindestens eine Sektor des Bereiches, in dem sich ein entsprechender Kindersitz oder eine Babyschale befindet, stärker verdunkelt werden als andere zu verschattende Sektoren. So können Kinder in Fahrzeugen individuell berücksichtigt werden. Beispielsweise kann eine maximale Abschattung von Kindersitzen und/oder Babyschalen ermöglicht werden, was insbesondere für schlafende Kinder auf dem Rücksitz durch von oben einfallendes Licht besonders vorteilhaft ist.

In einem weiteren Aspekt betrifft die Erfindung eine Vorrichtung zur Verschattung einer in einem Bereich befindlichen Person und/oder eines Lebewesens und/oder eines Gegenstandes, wobei die Vorrichtung mindestens einen Sensor zum Erkennen der Position von mindestens einer in dem Bereich befindlichen Person oder mindestens einem Lebewesen und/oder mindestens einem Gegenstand, die bzw. der sich in mindestens einem zuvor definierten Sektor des Bereiches befindet, umfasst, wobei die Vorrichtung ferner eine Steuereinheit zur Ansteuerung einer Transparenz mindestens eines Bereiches eines Oberflächenelementes des Bereiches umfasst, um den mindestens einen Sektor des Bereiches zu verschatten. Dabei kann die Vorrichtung einen Sensor, vorzugsweise eine Kamera, zum Erkennen von außerhalb des Bereiches befindlichen Lichtquellen umfassen. Ferner kann die Vorrichtung einen Sensor zum Ermitteln des Lichteinfallswinkels durch mindestens ein Oberflächenelement umfassen, beispielsweise einen Lichtsensor oder eine Kamera. Ferner kann die Vorrichtung einen Regensensor umfassen.

Insbesondere ist die Vorrichtung zur Durchführung eines oben beschriebenen Verfahrens ausgebildet.

Es zeigen in rein schematischer Darstellung
- Figur 1:: ein Ablaufdiagramm eines erfindungsgemäßen Verfahrens, und
- Figur 2:: eine erfindungsgemäße Vorrichtung.

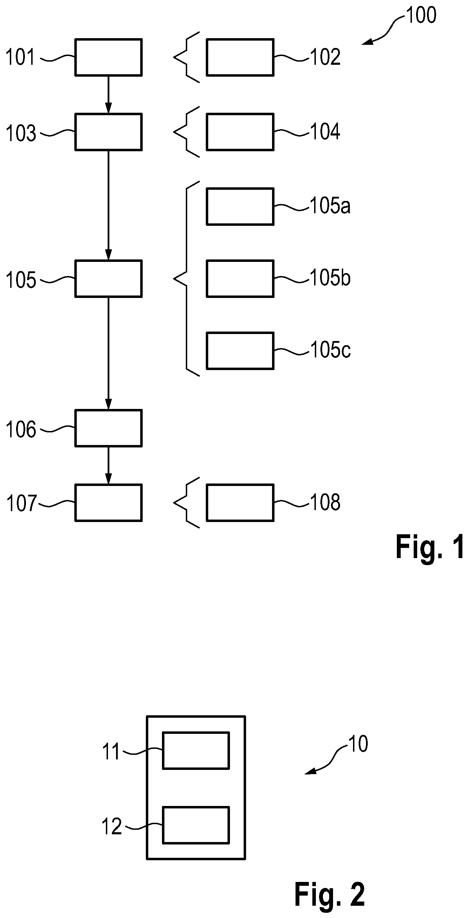

Figur 1 zeigt ein Ablaufdiagramm eines erfindungsgemäßen Verfahrens 100, wobei das Verfahren 100 das Erkennen 101 einer Position von mindestens einer Person und/oder mindestens einem Lebewesen und/oder mindestens einem Gegenstand, der sich in einem Bereich befindet, und zwar in mindestens einem zuvor definierten Sektor des Bereiches, umfasst. Insbesondere werden ferner Kindersitz und/oder Babyschalen erkannt 102.

Ferner erfolgt die Ansteuerung 106 einer Transparenz mindestens eines Bereiches mindestens eines Oberflächenelementes des Bereiches, um den mindestens einen Sektor, in dem sich eine Person und/oder ein Lebewesen und/oder ein Gegenstand befindet, zu verschatten 107. Sektoren, in denen sich ein Kindersitz und/oder eine Babyschale befindet, können stärker verschattet werden 108.

Zur Verschattung wird mindestens ein anzusteuernder Bereich des Oberflächenelementes bestimmt 105. Hierzu wird ein Lichteinfallswinkel ermittelt 103, der ferner an in einer Umgebung eines Fahrzeuges befindliche andere Fahrzeuge weitergegeben werden kann 104. Dies ist dann der Fall, wenn es sich bei dem Bereich um einen Passagierraum eines Fahrzeuges handelt.

Der anzusteuernde Bereich kann insbesondere unter Berücksichtigung 105a einer zuvor ausgewählten Anforderung mindestens einer im Bereich befindlichen Person erfolgen. Ferner kann die Bestimmung unter Berücksichtigung 105b eines zuvor bestimmten Lichteinfalls und/oder externer Informationen erfolgen. Ferner kann die Bestimmung unter Berücksichtigung 105c einer Fahrtrichtung des Fahrzeuges erfolgen. Dabei kann das Verfahren das zyklische Abfragen von Anforderungen mindestens einer im Bereich befindlichen Person umfassen.

Ferner kann die Bestimmung 105 des anzusteuernden Bereichs des Oberflächenelementes und die Ansteuerung 106 fortlaufend erfolgen.

Figur 2 zeigt eine erfindungsgemäße Vorrichtung (10). Die Vorrichtung (10) weist mindestens einen Sensor (11) zum Erkennen der Position von mindestens einer in dem Bereich befindlichen Person und/oder mindestens einem Lebewesen und/oder mindestens einem Gegenstand in mindestens einem zuvor definierten Sektor des Bereiches auf. Ferner umfasst die Vorrichtung (10) eine Steuereinheit (12) zur Ansteuerung einer Transparenz mindestens eines Bereichs des Oberflächenelementes des Bereiches zur Verschattung des mindestens eines Sektors des Bereiches.

### Bezugszeichenliste

- 100: Verfahren
- 101: Erkennen einer Position von mindestens einer in einem Bereich befindlichen Person und/oder mindestens einem Lebewesen und/oder mindestens einem Gegenstand in mindestens einem zuvor definierten Sektor des Bereiches,
- 102: Erkennen von Kindersitzen und/oder Babyschalen
- 103: Ermittlung eines Lichteinfallswinkels
- 104: Weitergabe des ermittelten Lichteinfallswinkels an in einer Umgebung des Fahrzeuges befindliche andere Fahrzeuge
- 105: Bestimmung des mindestens einen anzusteuernden Bereichs des Oberflächenelementes
- 105a: Berücksichtigung zuvor ausgewählter Anforderungen mindestens einer im Bereich befindlichen Person
- 105b: Berücksichtigung eines zuvor bestimmten Lichteinfallswinkel hinsichtlich mindestens eines Oberflächenelementes und/oder externer Informationen
- 105c: Berücksichtigung einer Position und Bewegungsrichtung des Fahrzeuges
- 106: Ansteuerung einer Transparenz mindestens eines Bereichs mindestens eines Oberflächenelementes des Bereiches zur Verschattung des mindestens eines Sektors des Bereiches
- 107: Verschattung einer in einem Bereich befindlichen Person und/oder eines Lebewesens und/oder eines Gegenstandes
- 108: stärkere Verschattung von Sektoren mit Kindersitzen und/oder Babyschalen
- 10: Vorrichtung
- 11: Sensor
- 12: Steuereinheit

## Patentansprüche

1. Verfahren (100) zur Verschattung eines in einem Bereich befindlichen Gegenstandes, nämlich eines im Bereich fest verbauten Displays,
wobei der Bereich durch mindestens ein Oberflächenelement zumindest teilweise begrenzt wird,
das Verfahren (100) die folgenden Schritte umfasst:
a) Erkennen (101) einer Position von mindestens eines in dem Bereich befindlichen Gegenstands in mindestens einem zuvor definierten Sektor des Bereichs, und
b) Ansteuerung (106) einer Transparenz mindestens eines Bereichs des mindestens einen Oberflächenelementes zur Verschattung des mindestens eines Sektors des Bereichs
**dadurch gekennzeichnet, dass**
eine Verschattung dann ausgelöst wird, wenn eine Information auf dem Display angezeigt wird.

2. Verfahren (100) nach Anspruch 1,
**dadurch gekennzeichnet, dass**
das Verfahren (100) eine Bestimmung (105) des mindestens einen anzusteuernden Bereichs der Oberflächenelementes zur Verschattung des mindestens einen Sektors des Bereiches umfasst.

3. Verfahren (100) nach Anspruch 2,
**dadurch gekennzeichnet, dass**
die Bestimmung unter Berücksichtigung (105b) eines zuvor bestimmten Lichteinfallswinkel hinsichtlich des mindestens einen Oberflächenelementes und/oder externer Informationen erfolgt.

4. Verfahren (100) nach Anspruch 2 oder 3,
**dadurch gekennzeichnet, dass**
die Bestimmung unter Berücksichtigung (105a) zuvor ausgewählter Anforderungen mindestens einer im Bereich befindlichen Person und/oder mindestens eines Lebewesens und/oder mindestens eines Gegenstandes erfolgt.

5. Verfahren (100) nach einem der vorangehenden Ansprüche,
**dadurch gekennzeichnet, dass**
es sich bei dem Bereich um einen Passagierraum eines Fahrzeuges handelt,
wobei es sich bei dem mindestens einen Oberflächenelement um eine Seitenscheibe und/oder eine Heckscheibe und/oder eine Frontscheibe und/oder eine Deckenscheibe des Fahrzeuges handelt.

6. Verfahren (100) nach den Ansprüchen 2 und 5
**dadurch gekennzeichnet, dass**
die Bestimmung (105) unter Berücksichtigung (105c) einer Position und/oder Bewegungsrichtung des Fahrzeuges erfolgt.

7. Verfahren (100) nach den Ansprüchen 3 und 5
**dadurch gekennzeichnet, dass**
das Verfahren (100) eine Weitergabe (104) des ermittelten Lichteinfallswinkels an in einer Umgebung des Fahrzeuges befindliche andere Fahrzeuge umfasst.

8. Verfahren (100) nach einem der Ansprüche 5 bis 7
**dadurch gekennzeichnet, dass**
das Verfahren ein Erkennen (102) von Kindersitzen und/oder Babyschalen in mindestens einem Sektor umfasst,
wobei der mindestens eine Sektor des Bereichs stärker verschattet wird (108) als andere zu verschattende Sektoren.

9. Vorrichtung (10) zur Verschattung eines in einem Bereich befindlichen Gegenstandes, nämlich eines im Bereich fest verbauten Displays,
wobei der Bereich durch mindestens ein Oberflächenelement zumindest teilweise begrenzt wird,
wobei die Vorrichtung (10) mindestens einen Sensor (11) zum Erkennen der Position von mindestens eines in dem Bereich befindlichen Gegenstands in mindestens einem zuvor definierten Sektor des Bereiches umfasst,
wobei das Vorrichtung (10) ferner eine Steuereinheit (12) zur Ansteuerung einer Transparenz mindestens eines Bereichs eines Oberflächenelementes des Bereiches zur Verschattung des mindestens eines Sektors des Bereiches umfasst,
**dadurch gekennzeichnet, dass**
eine Verschattung dann ausgelöst wird, wenn eine Information auf dem Display angezeigt wird.

## Claims

1. Method (100) for shading an object located in a region,
namely a display permanently installed in the region,
the region being at least partially delimited by at least one surface element,
the method (100) comprising the steps of:
a) detecting (101) a position of at least one object located in the region in at least one previously defined sector of the region, and
b) controlling (106) a transparency of at least one region of the at least one surface element in order to shade the at least one sector of the region
**characterized in that**
shading is triggered when information is shown on the display.

2. Method (100) according to claim 1,
**characterized in that**
the method (100) comprises determining (105) the at least one region of the surface element to be controlled for shading the at least one sector of the region.

3. Method (100) according to claim 2,
**characterized in that**
the determination is made taking into account (105b) a previously determined angle of incidence of light with respect to the at least one surface element and/or external information.

4. Method (100) according to claim 2 or claim 3,
**characterized in that**
the determination is made taking into account (105a) previously selected requirements of at least one person and/or at least one living being and/or at least one object located in the region.

5. Method (100) according to any of the preceding claims,
**characterized in that**
the region is a passenger compartment of a vehicle, the at least one surface element being a side window and/or a rear window and/or a windshield and/or a sunroof of the vehicle.

6. Method (100) according to claim 2 and claim 5,
**characterized in that**
the determination (105) is made taking into account (105c) a position and/or direction of movement of the vehicle.

7. Method (100) according to claim 3 and claim 5,
**characterized in that**
the method (100) comprises transmitting (104) the determined angle of incidence of light to other vehicles located in the environment of the vehicle.

8. Method (100) according to any of claims 5 to 7,
**characterized in that**
the method comprises detecting (102) child car seats and/or infant car seats in at least one sector,
the at least one sector of the region being shaded (108) more strongly than other sectors to be shaded.

9. Device (10) for shading an object located in a region,
namely a display permanently installed in the region,
the region being at least partially delimited by at least one surface element,
the device (10) comprising at least one sensor (11) for detecting the position of at least one object located in the region in at least one previously defined sector of the region,
the device (10) further comprising a control unit (12) for controlling a transparency of at least one region of a surface element of the region in order to shade the at least one sector of the region,
**characterized in that**
shading is triggered
when information is shown on the display.

## Revendications

1. Procédé (100) permettant d'assombrir un objet se trouvant dans une zone,
à savoir un appareil d'affichage monté de manière fixe dans la zone, dans lequel la zone est délimitée au moins partiellement par au moins un élément formant surface,
le procédé (100) comprend les étapes suivantes :
a) détection (101) d'une position d'au moins un objet se trouvant dans la zone dans au moins un secteur prédéfini de la zone, et
b) activation (106) d'une transparence d'au moins une zone de l'au moins un élément formant surface pour l'assombrissement de l'au moins un secteur de la zone
**caractérisé en ce que**
un assombrissement est déclenché lorsque des informations sont affichées sur l'appareil d'affichage.

2. Procédé (100) selon la revendication 1,
**caractérisé en ce que**
le procédé (100) comprend une détermination (105) de l'au moins une zone à activer de l'élément formant surface pour l'assombrissement de l'au moins un secteur de la zone.

3. Procédé (100) selon la revendication 2,
**caractérisé en ce que**
la détermination est effectuée en tenant compte (105b) d'un angle d'incidence de la lumière prédéterminé par rapport à l'au moins un élément formant surface et/ou d'informations externes.

4. Procédé (100) selon la revendication 2 ou 3,
**caractérisé en ce que**
la détermination est effectuée en tenant compte (105a) d'exigences présélectionnées d'au moins une personne et/ou d'au moins un être vivant et/ou d'au moins un objet se trouvant dans la zone.

5. Procédé (100) selon l'une des revendications précédentes,
**caractérisé en ce que**
la zone est un espace passager d'un véhicule, dans lequel l'au moins un élément formant surface est une vitre latérale et/ou une vitre arrière et/ou une vitre avant et/ou une vitre de toit du véhicule.

6. Procédé (100) selon l'une des revendications 2 et 5,
**caractérisé en ce que**
la détermination (105) est effectuée en tenant compte (105c) d'une position et/ou d'une direction de déplacement du véhicule.

7. Procédé (100) selon l'une des revendications 3 et 5,
**caractérisé en ce que**
le procédé (100) comprend une transmission (104) de l'angle d'incidence de la lumière défini à d'autres véhicules se trouvant dans un environnement du véhicule.

8. Procédé (100) selon l'une des revendications 5 à 7,
**caractérisé en ce que**
le procédé comprend une détection (102) de sièges enfants et/ou de coques pour bébés dans au moins un secteur,
dans lequel l'au moins un secteur de la zone est plus assombri (108) que d'autres secteurs à assombrir.

9. Dispositif (10) permettant d'assombrir un objet se trouvant dans une zone, à savoir un appareil d'affichage monté de manière fixe dans la zone, dans lequel la zone est délimitée au moins partiellement par au moins un élément formant surface,
dans lequel le dispositif (10) comprend au moins un capteur (11) pour la détection de la position d'au moins un objet se trouvant dans la zone dans au moins un secteur prédéfini de la zone,
dans lequel le dispositif (10) comprend en outre une unité de commande (12) pour l'activation d'une transparence d'au moins une zone d'un élément formant surface de la zone pour l'assombrissement de l'au moins un secteur de la zone, **caractérisé en ce qu'**un assombrissement est déclenché
lorsque des informations sont affichées sur l'appareil d'affichage.
